# EUROPEAN PATENT SPECIFICATION

(11) **EP 0 784 495 B1**
(45) Date of publication and mention of the grant of the patent: **15.05.2002**
(21) Application number: 95933497.0
(22) Date of filing: 06.10.1995
(51) Int. Cl.: B01D 17/05

(54) **OIL RECOVERY PROCESS**
ÖL-RÜCKGEWINNUNGSVERFAHREN
PROCEDE DE RECUPERATION D'HUILE

(30) Priority: 07.10.1994 GB 9420276
(43) Date of publication of application: 23.07.1997
(73) Proprietor: THE BURWOOD CORPORATION LIMITED, London SW11 3BG (GB)
(72) Inventor: WALL, Kevin, South Wirral L64 1TG (GB); ZARD, Pauline, William, London SW7 3QB (GB); BARCLAY-MILLER, David, James, London SE1 2YR (GB); MARTIN, David, William, Merseyside L21 0HR (GB)
(74) Representative: Harding, Charles Thomas
(86) International application number: GB9502370
(87) International publication number: WO9611044

(56) References cited:
- DE-C- 3 338 923
- US-A- 2 307 058
- US-A- 2 510 335
- US-A- 2 597 207
- US-A- 4 120 815
- US-A- 4 938 876

## Description

The present invention relates to an oil recovery process and a system for same.

Oil-containing emulsions are typically used in applications such as solvent cleaning, metal cutting oils and well-bore drilling fluids. At the end of their useful working lives the emulsions are disposed of, typically by incineration. Incineration of emulsions with high water contents is expensive but the cost can be reduced by first breaking the emulsion and incinerating only the oil phase. Current technology for breaking emulsions uses expensive and poorly biodegradable demulsification chemicals, typically block co-polymers of poly(ethylene oxide)-poly(propylene oxide), followed by a mechanical separation process.

The present invention seeks to overcome the problems associated with the prior art processes for breaking emulsions.

According to a first aspect of the present invention there is provided a process for the destabilisation of an emulsion comprising contacting the emulsion with a non-ionic composition, wherein the non-ionic composition comprises at least one alkoxylated fatty oil, and wherein the alkoxylated fatty oil has low solubility in the aqueous and organic phases of the emulsion under the prevailing process conditions.

The present invention therefore relates to the new use of alkoxylated fatty oils for breaking emulsions.

The term "emulsion" as used herein is taken to mean a dispersion of one liquid within a continuous phase of another dissimilar liquid.

The term "fatty oil" as used herein refers to the liquid ester product of at least one aliphatic acid and an alcohol. The term usually relates to ester products of natural origin wherein the alcohol is the polyhydric alcohol glycerol, but synthetic esters are not excluded provided that they can be alkoxylated.

The aliphatic acids may be saturated or unsaturated and should one or more contain groups that are reactive towards alkylene oxides, for example -OH, -SH, -NH₂. The acids may contain hydrocarbon side branches, although these are usually less desirable because of their inherently lower biodegradability. The acids should contain at least 6 carbon atoms and preferably more than 12 and more preferably greater than 16 carbon atoms. The acids should preferably contain less than 30 carbon atoms and more preferably less than 24 carbon atoms.

Preferably, the alcohols used in forming the fatty oils should be aliphatic moieties with no more than two carbon atoms for each oxygen atom present in the alcohol molecule and preferably they should have a total number of carbon atoms between one and eight. The alcohols may be derived from natural or synthetic sources. The alcohol is preferably glycerol.

According to one preferred aspect of the present invention the organic-aqueous emulsions are broken into separate phases using a low cost composition, containing alkoxylated fatty oils, that is essentially insoluble in both the organic and aqueous phases that make up the emulsion under the prevailing process conditions. Being almost insoluble, a high percentage of the demulsifying chemicals can optionally be recovered for reuse.

According to another preferred aspect of the present invention the chemical or combination of chemicals preferably includes alkoxylated castor oil in the composition and more preferably ethoxylated castor oil. This material being relatively inexpensive, and with the correct selection of the average degree of alkoxylation, is essentially insoluble in water and many organic phases.

According to another preferred aspect of the present invention the composition includes non-ionic surfactant components selected such that the stability of the emulsion is reduced to the point where demulsification is rapid.

According to another preferred aspect of the present invention process variables such as temperature and aqueous phase salinity may optionally be adjusted in order to speed the demulsification process.

According to another preferred aspect of the present invention the insoluble demulsifier does not contaminate the separated emulsion phase and so this permits their reuse where this is desirable.

According to another preferred aspect of the present invention the nonionic composition modifies the phase inversion temperature and interfacial tension of the emulsion.

The composition is preferably used to break emulsions stabilised by nonionic surfactants. The emulsions may be water-in-oil or oil-in-water.

Without wishing to be bound by theory the present invention is believed to work by modifying the phase inversion temperature and interfacial tension of the emulsion. It is generally known that the stability of an emulsion is at a minimum when it is at the phase inversion temperature. Although a non-ionically stabilised emulsion may be destabilised using any combination of surfactants that modify the phase inversion temperature, the benefit of the composition of the present invention is that as the emulsion separates into its constituent phases, the main demulsifying chemical forms a separate phase that can be recovered at the end of the demulsification process ready for reuse. Because the main demulsifying chemical is cheap and recoverable it can be used in large amounts such that demulsification is rapid without the need for special demulsifying equipment, although its use is not precluded. Other process variables such as temperature and salinity of the aqueous phase may be optionally adjusted to enhance the destabilising effect of the composition and to minimise the solubility of the composition in the bulk phases.

Apart from the breaking of emulsions for the purpose of disposal. one potential application of the present invention is as a means of reducing the amount of oil associated with the rock cuttings that are generated from well-bore drilling operations.

The present invention will now be described by the way of examples.

### EXAMPLES

1. A brine-in-oil emulsion was made up using 200 ml of mineral oil, 10 ml of an oleic diethanolamide, 10 ml of an ethoxylated monoethanolamide, 2 ml of an ICI polymeric dispersant "Hypermer B239", 1 ml of a polyalkenyl succinimide and 300 ml of 20% w/w calcium chloride brine. 10%v/v of ethoxylated castor oil (HLB 11) was mixed in and the sample stood to one side. After 1 hour a layer of oil had separated from the emulsion, equivalent to 30% of the initial volume. After 16 hours the volume of oil separated was equivalent to 90% of the total oil present and a third phase (mainly consisting of castor oil) had begun to form above a layer of oil-in-brine emulsion.
2. The previous experiment was repeated with fresh emulsion, but instead of fresh castor oil, product recovered from the previous experiment was used. After standing for 1½ hours, 50% of the oil had separated. After 24 hours, there were three distinct layers, the upper layer equivalent to more than 95% of the original oil.
3. The upper oil phase recovered from examples 1 and 2 was collected and 200 ml of it was made up into an emulsion as in example 1. The emulsion stability was measured using an electrical stability meter and found to be no different from the original.
4. An oil-in-water emulsion was formed using an ethoxylated alkyl phenol. 17 ml of surfactant was added to 300 ml of water and then 200 ml of oil was mixed in. 25 ml of ethoxylated castor oil (HLB 5.0) was mixed in and the mix centrifuged for 1 hour. After this time, 75 % of the oil had separated out.
5. Two 50 ml samples of a 5.44kg/4.54l (12 lb/gall) oil-based well bore mud made according to patent application WO-A-9 530 722, were taken. To one, 5 ml of ethoxylated castor oil (HLB 11) was mixed in, to the other 5 ml of ethoxylated alcohol (HLB 11) was mixed in. After standing for 15 minutes the sample containing the ethoxylated castor oil was beginning to separate, whereas the other sample was still a single phase.

Thus in preferred embodiment, the present invention relates to a new use for low cost nonionic compositions containing alkoxylated fatty oils for the destabilisation of emulsions in which the destabilising alkoxylated fatty oils have low solubility in the aqueous and organic phases of the emulsion under the prevailing process conditions and may be optionally recovered for reuse.

The composition preferably contains an alkoxylated castor oil. The alkoxylated fatty oil is more preferably ethoxylated castor oil. The average degree of ethoxylation of the oil is preferably chosen to minimise the stability of the emulsion whilst minimising the solubility in the emulsion phases. Other components that increase the rapidity of the demulsification process may be optionally included. One or more of the recovered phases may optionally be reused. The process conditions may optionally be adjusted to increase the speed of phase separation. Process equipment that enhances the speed of phase separation may optionally be used.

## Claims

1. A process for the destabilisation of an emulsion comprising contacting the emulsion with a nonionic composition, wherein the nonionic composition comprises at least one alkoxylated fatty oil, and wherein the alkoxylated fatty oil has low solubility in the aqueous and organic phases of the emulsion under the prevailing process conditions.

2. The process according to claim 1 wherein the alkoxylated fatty oil is an alkoxylated castor oil.

3. A process according to claim 2 wherein the alkoxylated castor oil is ethoxylated castor oil.

4. A process according to any one of the preceding claims wherein the nonionic composition is recovered for reuse.

5. A process according to any one of the preceding claims wherein the nonionic composition modifies the phase inversion temperature and interfacial tension of the emulsion.

## Patentansprüche

1. Verfahren zur Destabilisierung einer Emulsion, bei dem man die Emulsion mit einer nichtionischen Zusammensetzung in Berührung bringt, wobei die nichtionische Zusammensetzung wenigstens ein alkoxyliertes Fettöl umfaßt und worin das alkoxylierte Fettöl geringe Löslichkeit in den wäßrigen und organischen Phasen der Emulsion unter den herrschenden Verfahrensbedingungen hat.

2. Verfahren nach Anspruch 1, bei dem das alkoxylierte Fettöl ein alkoxyliertes Rizinusöl ist.

3. Verfahren nach Anspruch 2, bei dem das alkoxylierte Rizinusöl mit ethoxyliertes Rizinusöl ist.

4. Verfahren nach einem der vorausgehenden Ansprüche, bei dem die nichtionische Zusammensetzung für Wiederverwendung zurückgewonnen wird.

5. Verfahren nach einem der vorausgehenden Ansprüche, bei dem die nichtionische Zusammensetzung die Phasenumkehrtemperatur und die Grenzflächenspannung der Emulsion modifiziert.

## Revendications

1. Procédé pour la déstabilisation d'une émulsion, comprenant la mise en contact de l'émulsion avec une composition non ionique, dans lequel la composition non ionique comprend au moins une huile grasse alkoxylée, et dans lequel l'huile grasse alkoxylée a une faible solubilité dans la phase aqueuse et la phase organique de l'émulsion dans les conditions régnant dans la mise en oeuvre du procédé.

2. Procédé suivant la revendication 1, dans lequel l'huile grasse alkoxylée est une huile de ricin alkoxylée.

3. Procédé suivant la revendication 2, dans lequel l'huile de ricin alkoxylée consiste en huile de ricin éthoxylée.

4. Procédé suivant l'une quelconque des revendications précédentes, dans lequel la composition non ionique est récupérée à des fins de réutilisation.

5. Procédé suivant l'une quelconque des revendications précédentes, dans lequel la composition non ionique modifie la température d'inversion de phase et la tension interfaciale de l'émulsion.
